# EUROPÄISCHE PATENTSCHRIFT

(11) **EP 1 209 375 B1**
(45) Veröffentlichungstag und Bekanntmachung des Hinweises auf die Patenterteilung: **22.10.2003**
(21) Anmeldenummer: 01117187.3
(22) Anmeldetag: 16.07.2001
(51) Int. Cl.: F16D 3/84

(54) **Faltenbalg**
Gaiter
Gaine

(30) Priorität: 22.11.2000 DE 10058172
(43) Veröffentlichungstag der Anmeldung: 29.05.2002
(73) Patentinhaber: Carl Freudenberg KG, 69469 Weinheim (DE)
(72) Erfinder: Haubold, Kirsten, 10247 Berlin (DE); Rose, Urs, 10243 Berlin (DE)

(56) Entgegenhaltungen:
- EP-A- 0 234 155
- EP-A- 0 924 450
- WO-A-97/26473
- US-A- 5 961 388

## Beschreibung

Die Erfindung betrifft einen Faltenbalg aus elastischem Material zur Abdichtung eines Maschinenelements, umfassend einen Falten aufweisenden Balgabschnitt und zumindest einen einstückig und materialeinheitlich mit dem Balgabschnitt ausgebildeten, stirnseitig angeordneten Befestigungsbund, der mittels eines Befestigungselements auf dem Außenumfang des Maschinenelements festlegbar ist.

### Stand der Technik

Ein solcher Faltenbalg ist aus EP 0 924 450 A2 bekannt. Der Befestigungsbund ist einstückig und materialeinheitlich an den Balgabschnitt angeformt, wobei in dem Befestigungsbund ein mit radial nach innen gerichteten Vorsprüngen ausgebildeter Ring festgelegt ist. Der Ring ist ein separat erzeugtes Einzelteil. Der Balgabschnitt und der Befestigungsbund werden in einem Blasverfahren hergestellt, während der Ring aus Kunststoff besteht und durch Spritzgießen hergestellt wird. Im Anschluss an die Herstellung des Balgabschnitts mit dem Befestigungsbund und des Rings werden Befestigungsbund und Ring zueinander positioniert und unter Zuführung von Wärme miteinander verbunden.

### Darstellung der Erfindung

Der Erfindung liegt die Aufgabe zugrunde, einen Faltenbalg des eingangs genannten Art derart weiterzuentwickeln, dass er fertigungstechnisch einfacher und in wirtschaftlicher Hinsicht kostengünstiger herstellbar ist. Außerdem soll der gesamte Faltenbalg sortenrein recyclebar sein und / oder durch eine spezielle Anschlussgeometrie am Maschinenelement zuverlässig festlegbar sein.

Diese Aufgabe wird erfindungsgemäß mit den Merkmalen von Anspruch 1 gelöst. Auf vorteilhafte Ausgestaltungen nehmen die Unteransprüche Bezug.

Das elastische Material, das zur Anwendung gelangt, ist bevorzugt ein elastomerer Werkstoff, der im Blasverfahren verarbeitbar ist. Durch die einstückige Ausgestaltung des gesamten Faltenbalgs ist dieser einfach und kostengünstig herstellbar und im Anschluss an seine Verwendung als Ganzes sortenrein recyclebar.

Durch die kongruente Gestalt der ersten Vertiefung und des zweiten Vorsprungs oder des ersten Vorsprungs und der zweiten Vertiefung ist von Vorteil, dass das Befestigungselement in Umfangsrichtung eine gleichmäßige Anpresskraft auf den Befestigungsbund aufbringen kann, da in radialer Richtung zwischen dem Befestigungsbund und dem ersten Maschinenelement keine Hohlräume vorhanden sind.

Das Maschinenelement kann durch ein mit Schmiermittel geschmiertes, drehmomentübertragendes Gelenk gebildet ist. Derartige Gelenke müssen während ihrer Gebrauchsdauer durch den Faltenbalg zuverlässig vor einer Beaufschlagung mit Verunreinigungen aus der Umgebung geschützt werden. Außerdem ist es erforderlich, dass das Schmiermittel zur Schmierung zuverlässig innerhalb des Faltenbalgs gehalten wird und nicht in die Umgebung austritt.

Das Befestigungselement kann durch eine im Wesentlichen bandförmige Befestigungsschelle gebildet sein. Derartige Befestigungselemente haben sich zur Befestigung von Faltenbälgen bewährt, da ihre Handhabung einfach ist und Befestigungsschellen in vielen Größen preisgünstig verfügbar sind.

Um eine zuverlässige Festlegung des Faltenbalgs am Maschinenelement zu gewährleisten, hat es sich als vorteilhaft bewährt, wenn zumindest drei gleichmäßig in Umfangsrichtung verteilte erste Vertiefungen und zweite Vorsprünge oder erste Vorsprünge und zweite Vertiefungen vorgesehen sind. Durch die gleichmäßige Verteilung der Vertiefungen und Vorsprünge in Umfangsrichtung wird eine gleichmäßige Flächenpressung des Befestigungsbunds durch die Befestigungsschelle am Maschinenelement erreicht, so dass sich, bezogen auf eine dauerhaltbare Verbindung, eine geringe mechanische Beanspruchung des aus elastomerem Material bestehenden Befestigungsbunds einschließlich der einstückig und materialeinheitlich ausgebildeten ersten Vertiefungen oder ersten Vorsprünge ergibt. Die zweiten Vertiefungen oder zweiten Vorsprünge, die Bestandteil des Maschinenelements sind, bestehen zumeist aus einem metallischen Werkstoff.

Die ersten oder zweiten Vorsprünge können, im Querschnitt des Befestigungsbunds oder im Querschnitt des Maschinenelements betrachtet, im Wesentlichen trapezförmig ausgebildet sein, wobei die ersten Vorsprünge einen sich radial nach innen verkleinernden Querschnitt oder die zweiten Vorsprünge einen sich radial nach außen verkleinernden Querschnitt aufweisen. Bei einer trapezförmigen Gestalt der ersten oder zweiten Vorsprünge ist von Vorteil, dass der Sitz durch Keilwirkung zwischen Maschinenelement und Balg optimiert wird. Es besteht die Möglichkeit, Fertigungstoleranzen des Maschinenelements und / oder Faltenbalgs auszugleichen.

Nach einer anderen Ausgestaltung besteht die Möglichkeit, dass die ersten oder zweiten Vorsprünge im Querschnitt des Befestigungsbunds oder im Querschnitt des Maschinenelements betrachtet, im Wesentlichen teilkreisförmig ausgebildet sind.

Abweichend von den zuvor beschriebenen Ausgestaltungen können die ersten oder zweiten Vorsprünge im Querschnitt des Befestigungsbunds oder im Querschnitt des Maschinenelements betrachtet, im Wesentlichen rechteckförmig ausgebildet sein.

Die ersten oder zweiten Vorsprünge können im Querschnitt des Befestigungsbunds oder im Querschnitt des Maschinenelements in Umfangsrichtung im Wesentlichen als jeweils gleichsinnig geneigte, schiefe Ebene ausgebildet sein. Solche, in Umfangsrichtung betrachtet, rampenförmigen ersten oder zweiten Vorsprünge haben den Vorteil, dass Fertigungstoleranzen des Maschinenelements und / oder des Faltenbalgs durch die Keilwirkung der Vorsprünge ausgeglichen werden.

### Kurzbeschreibung der Zeichnung

Der Faltenbalg wird nachfolgend anhand der Fig. 1 bis 7 näher erläutert.

Diese zeigen jeweils in schematischer Darstellung:
- Fig. 1: einen Ausschnitt aus einem Ausführungsbeispiel eines Faltenbalgs,
- Fig. 2: eine perspektivische Ansicht eines Befestigungsbunds,
- Fig. 3: einen Längsschnitt durch den Befestigungsbund aus Fig. 2,
- Fig. 4: eine Ansicht des Befestigungsbunds aus Fig. 2 von links,
- Fig. 5: eine Ansicht eines weiteren Befestigungsbunds von links,
- Fig. 6: eine Ansicht eines anderen Befestigungsbunds von links,
- Fig. 7: eine Ansicht eines weiteren Befestigungsbunds von links.

### Ausführung der Erfindung

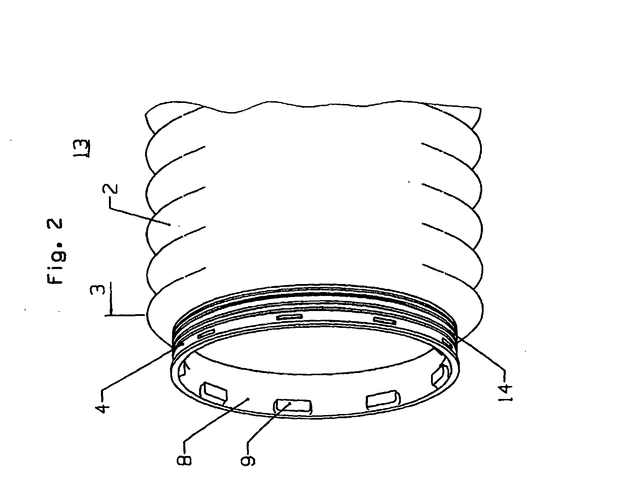

Die Fig. 2 bis 4, 5, 6 und 7 unterscheiden sich jeweils nur durch die Gestalt der ersten Vorsprünge und der ersten Vertiefungen.

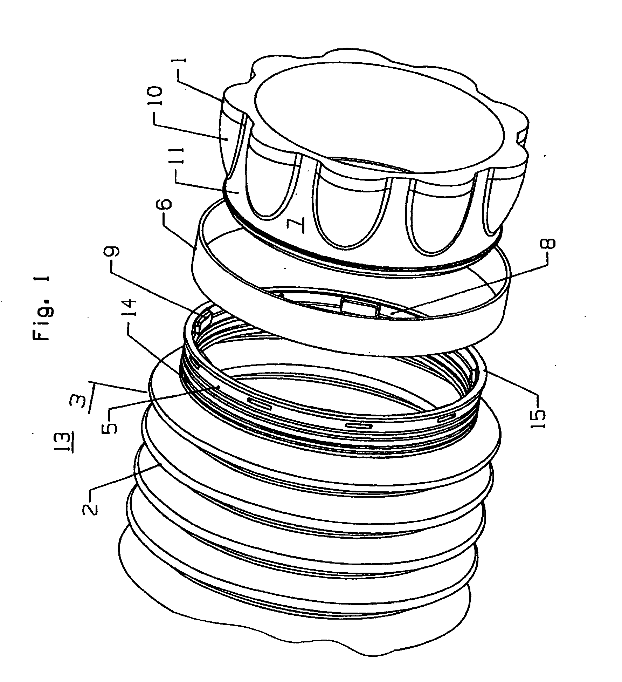

In Fig. 1 ist ein Ausführungsbeispiel eines Faltenbalgs mit einem Maschinenelement gezeigt. Das Maschinenelement 1 ist in diesem Ausführungsbeispiel als Kugelgelenk ausgebildet und von dem erfindungsgemäßen Faltenbalg aus elastischem Material umschlossen. Das Maschinenelement 1 ist, zur Verringerung der Reibung mit Schmiermittel gefüllt, das gegenüber der Umgebung 13 abgedichtet ist. Um sowohl eine Längenänderung in axialer Richtung zu ermöglichen als auch kardanische Auslenkbewegungen der Befestigungsbunde 4, 5 relativ zueinander, weist der Faltenbalg Falten 2 auf, die sich innerhalb des Balgabschnitts 3 erstrecken. In diesem Ausführungsbeispiel sind beide Befestigungsbunde 4, 5, die stimseitig an den Balgabschnitt 3 angrenzen, einstückig und materialeinheitlich mit dem Balgabschnitt 3 ausgebildet. Jeder Befestigungsbund 4, 5 ist durch ein Befestigungselement 6, das in den hier gezeigten Ausführungsbeispielen jeweils durch eine Befestigungsschelle gebildet ist, auf dem Außenumfang 7 des Maschinenelements 1 festgelegt.

Zur Funktion des Maschinenelements 1 aus Fig. 1 wird folgendes ausgeführt: Das Gelenk wird zur Übertragung von Drehmomenten verwendet. Es muss axiale Verschiebungen sowie Beugungen ermöglichen, weil Antriebselement und angetriebenes Element unterschiedliche Relativbewegungen durchführen, die Lage somit nicht starr zueinander ist. Gelenke werden dort eingesetzt, wo zuvor beschriebene Funktionseigenschaften erforderlich sind.

Die grundsätzliche Gestalt des Faltenbalgs sowie der Stirnseite des Maschinenelements, die dem Befestigungsbund 5 zugewandt ist, ist in den nachfolgend beschriebenen Fig. 2 bis 7 jeweils gleich.

Der Befestigungsbund 5 weist zumindest eine sich radial nach außen erstreckende erste Vertiefung 8 oder zumindest einen sich radial nach innen erstreckenden ersten Vorsprung 9 auf, je nach dem ob man vom kleinsten inneren Durchmesser oder dem Durchmesser ausgeht, von dem aus sich die ersten Vorsprünge 9 radial nach innen erstrecken. Das Maschinenelement 1 weist auf der dem Befestigungsbund 5 zugewandten Stirnseite zweite Vorsprünge 10 oder zweite Vertiefungen 11 auf, wobei die ersten Vertiefungen 8 im Wesentlichen kongruent zu den zweiten Vorsprüngen 10 oder die ersten Vorsprünge 9 im Wesentlichen kongruent zu den zweiten Vertiefungen 11 gestaltet sind. Wenn der Befestigungsbund 5 mit der Stirnseite des Maschinenelements 1 mittels des hier nicht dargestellten Befestigungselements 6 drehfest verbunden ist, ergibt sich eine kraft- und formschlüssige Verbindung der beiden Teile zueinander, so dass ein Verdrehen des Befestigungsbunds 4, 5 auf dem Maschinenelement 1 nicht möglich ist.

Der Befestigungsbund 5 bildet einen einstückigen Bestandteil des Balgabschnitts 3, wobei die ersten Vertiefungen 8 oder die ersten Vorsprünge 9 einen einstückigen, materialeinheitlichen Bestandteil des Befestigungsbunds 5 bilden. Der gesamte Faltenbalg ist im Blasverfahren hergestellt. Die Herstellung ist insgesamt einfach und kostengünstig durchführbar, wobei der gesamte Faltenbalg einschließlich des Befestigungsbunds 5 und der daran angeformten ersten Vorsprünge 9 / ersten Vertiefungen 8 sortenrein recyclebar ist.

In den Fig. 2 bis 4 ist ein erstes Ausführungsbeispiel eines Befestigungsbunds 5 gezeigt.

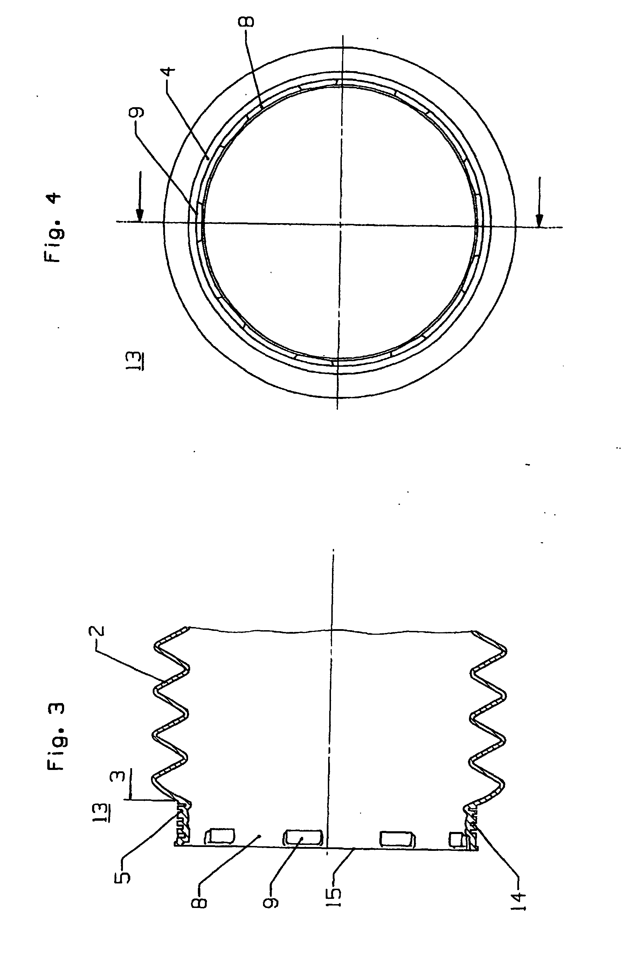

In Fig. 3 ist eine Ansicht in perspektivischer Darstellung gezeigt, wobei die ersten Vorsprünge 9 des Befestigungsbunds 5 in Umfangsrichtung jeweils eine erste Vertiefung 8 begrenzen.

Außenumfangsseitig ist der Befestigungsbund 5 mit nutförmigen, umfangsseitig umlaufenden Rillen 14 versehen, die von einem schematisch angedeuteten Befestigungselement 6 außenumfangsseitig umschlossen sind. Die Rillen 14 sind vorgesehen, um blastechnisch eine Innenkontur zu erzeugen, die einen formschlüssigen Sitz auf dem Maschinenelement 1 ermöglicht, damit die Spannkräfte des Befestigungselements 6 übertragen werden können.

In Fig. 3 ist der Befestigungsbund 5 aus Fig. 2 in längsgeschnittener Darstellung gezeigt. Die ersten Vorsprünge 9 sind von der Stirnseite 15 axial in Richtung des Balgabschnitts 3 zurückversetzt, so dass sie radial außenseitig vom Befestigungselement 6 umschlossen sind. Dadurch, ergibt sich eine haltbare, drehfeste Verbindung zu den zweiten Vorsprüngen 10 / zweiten Vertiefungen 11 des Maschinenelements 1.

In Fig. 4 ist eine Ansicht des Befestigungsbunds 5 aus Fig. 2 von links gezeigt. Neun gleichmäßige in Umfangsrichtung verteilte erste Vorsprünge 9 sind vorgesehen, die jeweils, im Querschnitt betrachtet, im Wesentlichen trapezförmig ausgebildet sind und in Umfangsrichtung betrachtet, kongruent gestaltete erste Vertiefungen 8 begrenzen.

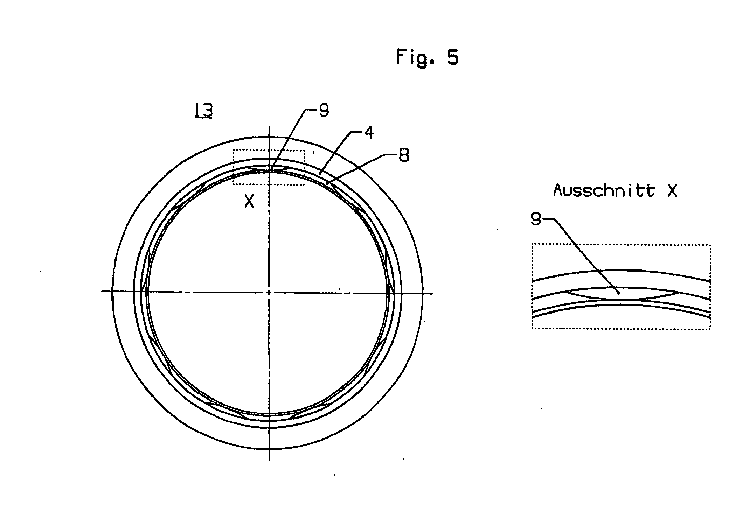

In den Fig. 5 ist ein weiteres Ausführungsbeispiel eines Faltenbalgs gezeigt. Das Ausführungsbeispiel aus Fig. 5 unterscheidet sich vom Ausführungsbeispiel aus den Fig. 2 bis 4 durch die Form der ersten Vertiefungen 8 / der ersten Vorsprünge 9. Die ersten Vorsprünge 9 sind teilkreisförmig ausgebildet, wobei Anzahl und Anordnung dem Ausführungsbeispiel aus den Fig. 2 bis 4 entspricht.

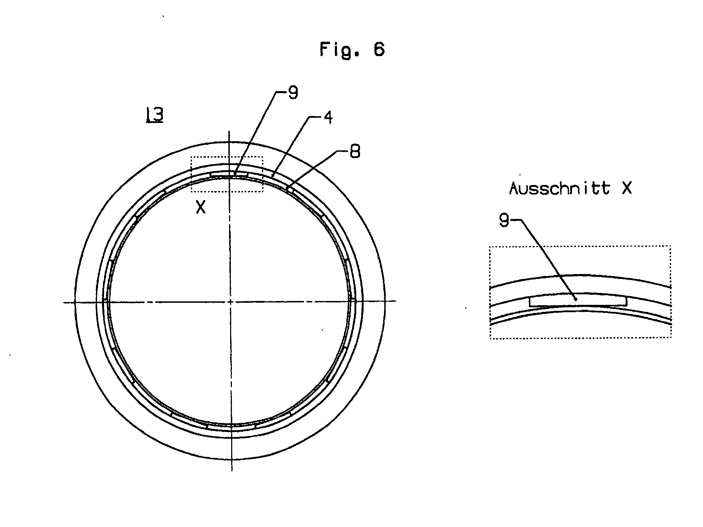

Im Ausführungsbeispiel aus den Fig. 6 sind die zuvor beschriebenen ersten Vorsprünge 9 / ersten Vertiefungen 8 abweichend von den zuvor beschriebenen Ausführungsbeispielen gemäß Fig. 2 bis 4 und 5 gestaltet. Die ersten Vorsprünge 9 und die ersten Vertiefungen 8 sind im Wesentlichen rechteckförmig ausgebildet.

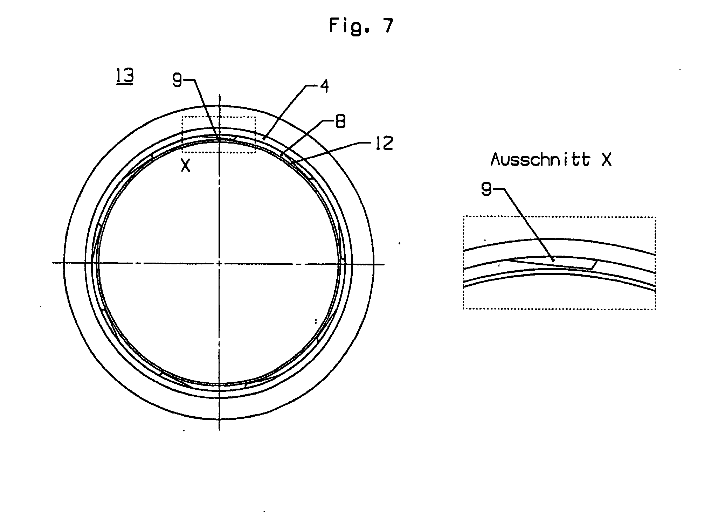

In einem weiteren Ausführungsbeispiel gemäß Fig. 7 sind die ersten Vorsprünge 9, in Umfangsrichtung des Befestigungsbunds 5 betrachtet, im Wesentlichen als jeweils gleichsinnig geneigte, schiefe Ebene 12 ausgebildet. Durch eine solche Ausgestaltung wird der Sitz durch die Keilwirkung zwischen Maschinenelement 1 und Balg. Fertigungstoleranzen des Maschinenelements 1 und / oder Faltenbalgs werden ausgeglichen.

## Patentansprüche

1. Faltenbalg aus elastischem Material zur Abdichtung eines Maschinenelements (1), umfassend einen Falten (2) aufweisenden Balgabschnitt (3) und zumindest einen einstückig und materlaleinheitlich mit dem Balgabschnitt (3) ausgebildeten, stirnseitig angeordneten Befestigungsbund (4, 5), der mittels eines Befestigungselements (6) auf dem Außenumfang (7) des Maschinenelements festlegbar ist, **dadurch gekennzeichnet, dass** einstückig und materialeinheitlich am Befestigungsbund (4, 5) von einer Stimseite (15) des Befestigungsbunds (5) axial in Richtung des Balgabschnitts (3) zurückversetzt innenumfangsseitig in Umfangsrichtung verteilt mehrere, sich radial nach außen erstreckende erste Vertiefungen (8) abwechselnd mit sich radial nach innen erstreckenden ersten Vorsprüngen (9) ausgebildet sind, welche zur drehfesten festlegbaren Verbindung mit außenumfangsseitig am Maschinenelement (1) in zugeordneter Weise vorgesehenen, in Umfangsrichtung verteilt angeordneten, sowie kongruent gestalteten zweiten Vorsprüngen (10) und zweiten Vertiefungen (11) zusammenarbeiten, und dass der Befestigungsbund (5) außenumfangsseitig mit nutförmigen, umfangsseitig umlaufenden Rillen (14) versehen ist.

2. Faltenbalg nach Anspruch 1, **dadurch gekennzeichnet, dass** das Maschinenelement (1) durch ein mit Schmiermittel geschmiertes, drehmomentübertragendes Gelenk gebildet ist.

3. Faltenbalg nach einem der Ansprüche 1 oder 2, **dadurch gekennzeichnet, dass** das Befestigungselement (6) durch eine im Wesentlichen bandförmige Befestigungsschelle gebildet ist.

4. Faltenbalg nach einem der Ansprüche 1 bis 3, **dadurch gekennzeichnet, dass** jeweils zumindest drei gleichmäßig in Umfangsrichtung verteilte erste Vertiefungen (8.1, 8.2, 8.3, ... ) und zweite Vorsprünge (10.1, 10.2, 10.3, ... ) oder erste Vorsprünge (9.1, 9.2, 9.3, ... ) und zweite Vertiefungen (11.1, 11.2, 11.3, ... ) vorgesehen sind.

5. Faltenbalg nach einem der Ansprüche 1 bis 4, **dadurch gekennzeichnet, dass** die ersten (9) oder zweiten Vorsprünge (10) im Querschnitt des Befestigungsbunds (4, 5) oder im Querschnitt des ersten Maschinenelements (1) betrachtet, im Wesentlichen trapezförmig ausgebildet sind und dass die ersten Vorsprünge (9) einen sich radial nach innen verkleinernden Querschnitt oder die zweiten Vorsprünge (10) einen sich radial nach außen verkleinernden Querschnitt aufweisen.

6. Faltenbalg nach einem der Ansprüche 1 bis 4, **dadurch gekennzeichnet, dass** die ersten (9) oder zweiten Vorsprünge (10) im Querschnitt des Befestigungsbunds (4, 5) oder im Querschnitt des Maschinenelements (1) betrachtet, im Wesentlichen teilkreisförmig ausgebildet sind.

7. Faltenbalg nach einem der Ansprüche 1 bis 4, **dadurch gekennzeichnet, dass** die ersten (9) oder zweiten Vorsprünge (10) im Querschnitt des Befestigungsbunds (4, 5) oder im Querschnitt des Maschinenelements (1) betrachtet, im Wesentlichen rechteckförmig ausgebildet sind.

8. Faltenbalg nach einem der Ansprüche 1 bis 4, **dadurch gekennzeichnet, dass** die ersten (9) oder zweiten Vorsprünge (10) im Querschnitt des Befestigungsbunds (4, 5) oder im Querschnitt des Maschinenelements (1) in Umfangsrichtung betrachtet, im Wesentlichen als jeweils gleichsinnig geneigte, schiefe Ebene (12) ausgebildet sind.

## Claims

1. A gaiter of elastic material for sealing a machine element (1), comprising a gaiter section (3) having folds (2) and at least one fastening collar (4, 5) which is formed in one piece with and of the same material as the gaiter section (3), is arranged at the end face and can be secured to the outer circumference (7) of the machine element by means of a fastening element (6), **characterized in that** a plurality of radially outwardly extending first recesses (8) alternating with radially inwardly extending first projections (9) are formed in one piece with and of the same material as the fastening collar (4, 5) in such a way as to be set back from an end face (15) of the fastening collar (5) axially in the direction of the gaiter section (3) and distributed in the circumferential direction on the inner circumference, which first recesses (8) and first projections (9), for a connection which can be secured such as to be locked against rotation, interact with second projections (10) and second recesses (11) which are provided in an associated manner on the outer circumference on the machine element (1), are arranged such as to be distributed in the circumferential direction and are of congruent design, and **in that** the fastening collar (5) is provided on the outer circumference with groove-shaped, circumferentially encircling channels (14).

2. A gaiter according to claim 1, **characterized in that** the machine element (1) is formed by a torque-transmitting joint lubricated with lubricant.

3. A gaiter according to either of claims 1 and 2, **characterized in that** the fastening element (6) is formed by an essentially band-shaped fastening clip.

4. A gaiter according to any one of claims 1 to 3, **characterized in that** in each case at least three first recesses (8.1, 8.2, 8.3,...) and second projections (10.1, 10.2, 10.3,...) or first projections (9.1, 9.2, 9.3,...) and second recesses (11.1, 11.2, 11.3,...), the said recesses and projections being distributed uniformly in the circumferential direction, are provided.

5. A gaiter according to any one of claims 1 to 4, **characterized in that** the first projections (9) or the second projections (10), as viewed in cross section of the fastening collar (4, 5) or in cross section of the first machine element (1), are of essentially trapezoidal design, and **in that** the first projections (9) have a cross section decreasing radially inwards or the second projections (10) have a cross section decreasing radially outwards.

6. A gaiter according to any one of claims 1 to 4, **characterized in that** the first projections (9) or the second projections (10), as viewed in cross section of the fastening collar (4, 5) or in cross section of the machine element (1), are designed essentially in the shape of a circle segment.

7. A gaiter according to any one of claims 1 to 4, **characterized in that** the first projections (9) or the second projections (10), as viewed in cross section of the fastening collar (4, 5) or in cross section of the machine element (1), are of essentially rectangular design.

8. A gaiter according to any one of claims 1 to 4, **characterized in that** the first projections (9) or the second projections (10), as viewed in the circumferential direction in cross section of the fastening collar (4, 5) or in cross section of the machine element (1), are designed essentially as an inclined plane (12) sloping in each case in the same direction.

## Revendications

1. Soufflet en matériau élastique servant à l'étanchéification d'un élément mécanique (1), comprenant un segment de soufflet (3) pourvu de plis (2) et au moins une collerette de fixation (4 , 5) située sur le côté frontal exécutée d'une seule pièce avec le segment de soufflet (3) et dans le même matériau que celui-ci, et qui peut être fixée sur la circonférence externe (7) de l'élément mécanique au moyen d'un élément de fixation (6), **caractérisé en ce que** la collerette de fixation (4, 5) est pourvue, sur le côté de sa circonférence interne, de plusieurs premiers creux (8) s'étendant vers l'extérieur dans le sens radial qui alternent avec des premières saillies (9) s'étendant vers l'intérieur dans le sens radial, lesquels creux et saillies, exécutés d'une seule pièce avec la collerette de fixation (4, 5) et dans le même matériau que celle-ci, sont répartis dans la direction circonférentielle et situés en retrait d'un côté frontal (15) de la collerette de fixation (5) dans le sens axial en direction du segment de soufflet (3) et coopèrent, en vue d'un assemblage pouvant être réalisé d'une manière empêchant la torsion, avec des secondes saillies (10) et des seconds creux (11) de forme congruente prévus de manière conjuguée sur le côté de la circonférence externe de l'élément mécanique (1) et répartis dans la direction circonférentielle, et **en ce que** la collerette de fixation (5) est pourvue, sur le côté de sa circonférence externe, de rainures (14) en forme de gorges faisant le tour de sa circonférence.

2. Soufflet selon la revendication 1, **caractérisé en ce que** l'élément mécanique (1) est formé par une articulation graissée par un lubrifiant qui transmet un couple de rotation.

3. Soufflet selon l'une des revendications 1 ou 2, **caractérisé en ce que** l'élément de fixation (6) est formé par un collier de fixation ayant essentiellement la forme d'une bande.

4. Soufflet selon l'une des revendications 1 à 3, **caractérisé en ce qu'**au moins trois premiers creux (8.1, 8.2, 8.3, ...) et secondes saillies (10.1, 10.2, 10.3, ...) ou premières saillies (9.1, 9.2, 9.3, ...) et seconds creux (11.1, 11.2, 11.3, ...) répartis de manière uniforme dans la direction circonférentielles sont prévus à chaque fois.

5. Soufflet selon l'une des revendications 1 à 4, **caractérisé en ce que** les premières (9) ou secondes saillies (10) sont exécutées de manière à avoir une forme essentiellement trapézoïdale, si l'on considère la section transversale de la collerette de fixation (4, 5) ou la section transversale du premier élément mécanique (1), et **en ce que** les premières saillies (9) ont une section transversale qui diminue vers l'intérieur dans le sens radial ou les secondes saillies (10) ont une section transversale qui diminue vers l'extérieur dans le sens radial.

6. Soufflet selon l'une des revendications 1 à 4, **caractérisé en ce que** les premières (9) ou secondes saillies (10) sont exécutées de manière à avoir essentiellement la forme d'un cercle primitif, si l'on considère la section transversale de la collerette de fixation (4, 5) ou la section transversale de l'élément mécanique (1).

7. Soufflet selon l'une des revendications 1 à 4, **caractérisé en ce que** les premières (9) ou secondes saillies (10) sont exécutées de manière à avoir une forme essentiellement rectangulaire, si l'on considère la section transversale de la collerette de fixation (4, 5) ou la section transversale de l'élément mécanique (1).

8. Soufflet selon l'une des revendications 1 à 4, **caractérisé en ce que** les premières (9) ou secondes saillies (10) sont exécutées essentiellement en tant que plan oblique (12) incliné à chaque fois dans le même sens, si l'on considère la section transversale de la collerette de fixation (4, 5) ou la section transversale de l'élément mécanique (1) dans la direction circonférentielle.
